# EUROPÄISCHE PATENTSCHRIFT

(11) **EP 3 370 875 B1**
(45) Veröffentlichungstag und Bekanntmachung des Hinweises auf die Patenterteilung: **03.06.2020**
(21) Anmeldenummer: 16808555.3
(22) Anmeldetag: 27.10.2016
(51) Int. Cl.: B02C 2/10, A47J 42/10, A23G 1/12, B02C 7/175

(54) **ZERKLEINERUNGSVORRICHTUNG UND VERFAHREN ZUM ZERKLEINERN VON ROHSTOFFEN**
CRUSHING DEVICE AND METHOD FOR CRUSHING RAW MATERIALS
DISPOSITIF DE BROYAGE ET PROCÉDÉ DE BROYAGE DE MATIÈRES BRUTES

(30) Priorität: 04.11.2015 DE 102015118858
(43) Veröffentlichungstag der Anmeldung: 12.09.2018
(73) Patentinhaber: NETZSCH-Feinmahltechnik GmbH, 95100 Selb (DE)
(72) Erfinder: DEVEGILI, Sérgio, Pomerode 89107 000 Santa Catarina (BR); HARBS, Theron, 89107000 Pomerode Selb (DE)
(86) Internationale Anmeldenummer: PCT/DE2016/000382
(87) Internationale Veröffentlichungsnummer: WO 2017/076382

(56) Entgegenhaltungen:
- EP-A2- 1 122 356
- CN-A- 102 755 918
- US-A- 2 738 930
- US-B1- 8 632 029

## Beschreibung

Die vorliegende Erfindung betrifft eine Zerkleinerungsvorrichtung und ein Verfahren zum Zerkleinern von Rohstoffen gemäß den Merkmalen der Oberbegriffe der Ansprüche 1 und 12.

### Stand der Technik

Die Erfindung bezieht sich auf eine Vorzerkleinerungsvorrichtung für grobe Rohstoffe, die anschließend einer weiteren Verarbeitung zugeführt werden. Insbesondere bezieht sich die Erfindung auf eine Vorzerkleinerung von Lebensmitteln für die Verarbeitung in Schokoladen beziehungsweise Compoundmassen oder Ähnlichem, wobei beispielsweise Nüsse, Mandel, Zucker, Kakaobohnen, Kaffeebohnen oder andere, insbesondere auch faserige, Lebensmittel für die weitere Verarbeitung vorzerkleinert und insbesondere fein vermahlen werden müssen.

US 1593854 B beschreibt eine Vorrichtung zum Brechen von Weizenkörnern zu groben Bestandteilen mit einem minimalen Anteil an feinem Material. Die Vorrichtung umfasst einen rotatorisch angetriebenen Brechkegel mit Außenzähnen, der innerhalb eines statisch angeordneten Brechhohlkegels mit korrespondierenden Innenzähnen angeordnet ist.

EP 1818100 A1 offenbart ein Mahlwerk zur Zerkleinerung von körnigem Material, insbesondere im Nahrungsmittelbereich, umfassend ein erstes und ein zweites Mahlelement. Zwischen diesen ist ein Mahlspalt ausgebildet. Eines der Mahlelemente ist rotatorisch ausgebildet, das andere Mahlelement ist statisch angeordnet. Zwischen dem Antrieb und dem nicht feststehenden Mahlelement ist in der Antriebskette wenigstens ein Kupplungselement vorgesehen, das gummielastisch ausgebildet ist, so dass der Antrieb elastisch an das nicht feststehende Mahlelement angekoppelt ist.

Vorzerkleinerungsvorrichtungen sind häufig auch Bestandteil von weiterverarbeitenden Maschinen. Beispielsweise beschreibt die WO 2015/055161 A1 eine Vorzerkleinerungsvorrichtung für eine Kugelmühle. Ein Zerkleinerungsring mit Innenverzahnung bildet ein erstes stationäres Zerkleinerungsmittel. Weiterhin umfasst die Vorzerkleinerungsvorrichtung ein zweites rotatorisches Zerkleinerungsmittel mit einem ersten und einem zweiten Teilbereich, wobei eine Außenverzahnung des ersten Teilbereiches unter Ausbildung eines Zerkleinerungsspaltes weitgehend in die Innenverzahnung des ersten Zerkleinerungsmittels greift.

Das Dokument CN102755918 A zeigt eine Scheibenmühle, die aus einer beweglichen Mahlscheibe und einer feststehenden Mahlscheibe besteht. Zwei Naben sind auf einer Mittelebene eines Bearbeitungsmaterialhohlraums der beweglichen Mahlscheibe angeordnet. Eine Materialwurfnut ist zwischen den beiden Naben angeordnet, und an den Außenseiten der beiden Naben sind vorstehende Blätter angeordnet, die symmetrisch auf einer geraden Linie verteilt sind. Diese Scheibenmühle hat den Vorteil, dass sie den Defekt überwindet, dass die bewegliche Mahlscheibe einer horizontalen Scheibenmühle nicht alle zu zerkleinernden Materialien antreiben kann, wodurch eine Begrenzung der Zerkleinerung entlang einer Umfangsnormalen Richtung im Bearbeitungsmaterialhohlraum der Mahlscheibe erreicht wird, verarbeitete Materialien fein zerkleinert werden können und eine Auswahl zur Optimierung der Scheibenmühle vorgesehen ist.

Das Dokument EP 1122356 A2 beschreibt einen Refiner bestehend aus einem Rotor und einem Stator mit einem Einlaßrohr und einem zylinder- oder kegelförmigen Mahlspalt zwischen Rotor und Stator. Sie ist vornehmlich dadurch gekennzeichnet, dass sich der Stoffzufuhrkanal vom Einlassrohr zum Mahlspalt hin in radialer Richtung erstreckt. Weiterhin zeigt das Dokument US 2738930 A eine Dispergiermaschine mit Vorzerkleinerungssystem und mehreren Dispergiersystemen unterschiedlicher Bauform.

Das Dokument US 8632029 B1 offenbart ein Materialzerkleinerungssystem mit einem Gehäuse, einem Deckel, einem Auslass und einem durch den Deckel angeordneten Zuführrohr zur Aufnahme von Partikeln. Das System kann eine Zentrifuge zur Aufnahme und Zerkleinerung der Partikel enthalten. An die Zentrifuge kann ein Motor zur Steuerung einer rotierenden Platte angeschlossen werden. Ein Frequenzumrichter kann an den Motor angeschlossen werden, um die Drehzahl des Drehtellers zu optimieren und so ein zu starkes Zermahlen der Partikel zu verhindern.

Aufgabe der Erfindung ist, eine verbesserte Zerkleinerung von Rohstoffen in Kombination mit einer geringeren Verschmutzungsanfälligkeit des Mahlwerks zu erzielen.

Die obige Aufgabe wird durch eine Zerkleinerungsvorrichtung und ein Verfahren zum Zerkleinern von Rohstoffen gelöst, die die Merkmale in den Patentansprüchen 1 und 12 umfassen. Weitere vorteilhafte Ausgestaltungen werden durch die Unteransprüche beschrieben.

### Beschreibung

Die Erfindung betrifft eine aus wenigstens zwei Teilen bestehende Zerkleinerungsvorrichtung zur Zerkleinerung von grobkörnigem Material, insbesondere von grobkörnigen Materialen aus dem Nahrungsmittelbereich. Das heißt, die Zerkleinerungsvorrichtung wird insbesondere zum Zerkleinern von Kakaobohnen, Kaffeebohnen, Nüssen, Kristallzucker, Schokoladenbruch oder Ähnlichem verwendet. Eine solche Zerkleinerungsvorrichtung kann weiterhin für die Zerkleinerung von Zwischenprodukten und auch von faserigen Rohstoffen und / oder Zwischenprodukten wie beispielsweise Fleisch und / oder Fleischprodukte verwendet werden.

Die Zerkleinerungsvorrichtung umfasst mindestens ein als Kreiskegel ausgebildetes erstes axial rotierbares Mahlmittel mit einer Außenmantelfläche und wenigstens ein gegenüber dem mindestens einen ersten axial rotierbaren Mahlmittel feststehendes trichterförmiges zweites Mahlmittel, welches das mindestens eine erste axial rotierbare Mahlmittel aufnimmt und zur Zerkleinerung des grobkörnigen Materials mit dem mindestens einen ersten axial rotierbaren Mahlmittel in Wirkverbindung steht. Die einander zugewandte Mantelflächen des ersten Mahlmittels und des zweiten Mahlmittels weisen jeweils Zähne auf. Beispielsweise ist zwischen dem ersten und dem zweiten
Mahlmittel ein Mahlspalt ausgebildet, durch den das zerkleinerte beziehungsweise vermahlene Produkt durchtritt und aus der Zerkleinerungsvorrichtung abgeführt und weiterer Verarbeitung zugeführt werden kann.

Erfindungsgemäß ist vorgesehen, dass das das mindestens eine axial rotierbare Mahlmittel wenigstens einen Förderkanal für das jeweilig zu zerkleinernde Material aufweist. Der Förderkanal wird aus mindestens einem ersten, sich in axialer Richtung erstreckenden Abschnitt und mindestens einem zweiten Abschnitt gebildet, wobei sich der zweite Abschnitt winklig an den ersten Abschnitt anschließt und eine Außenmantelfläche des axial rotierbaren Mahlmittels durchdringt.

Über den wenigstens einen Förderkanal wird das Mahlgut derart innerhalb der Mahlvorrichtung geleitet oder geführt, dass der Mahlspalt nicht durch grobe Mahlgutpartikel verstopft.

Gemäß einer bevorzugten Ausführungsform umfasst die Zerkleinerungsvorrichtung analog zu aus dem Stand der Technik bekannten Vorrichtungen als erstes Mahlmittel einen rotatorisch angetriebenen Brechkegel, der innerhalb des als statisch angeordneten Brechhohlkegel ausgebildeten zweiten Mahlmittels angeordnet ist. Der Brechkegel weist insbesondere die Grundform eines geraden Kreiskegels mit einer Kegelspitze, einer Mantelfläche, einer Kegelachse und einer Grundfläche auf. Der statisch angeordnete Brechhohlkegel umgibt den Brechkegel unter Ausbildung eines Mahlspaltes und wird im Folgenden aufgrund seiner Form auch als Trichter bezeichnet.

Vorzugsweise kann der Brechkegel beziehungsweise Kreiskegel auf seiner Außenmantelfläche sogenannte Außenzähne aufweisen und der Brechhohlkegel beziehungsweise Trichter kann auf seiner Innenmantelfläche sogenannte, insbesondere korrespondierende Innenzähne aufweisen, die die Zerkleinerung des Materials weiter unterstützen. Sowohl der Brechkegel als auch der Brechhohlkegel können eine progressive Verzahnung aufweisen. Das heißt insbesondere, dass die Zahndichte in einem Bereich, in dem das zu zerkleinernde Material zugeführt wird, geringer ist als in einem weiter entferntem Bereich, in dem die eigentliche Zerkleinerung stattfindet. Die Zähne des Brechkegels und / oder Brechhohlkegels können bezogen zur Längsachse angewinkelt ausgebildet sein.

Die Einheit aus einem ersten und einem zweiten Mahlmittel wird im Folgenden auch als Zerkleinerungseinheit bezeichnet. Die Zerkleinerungsvorrichtung umfasst vorzugsweise zusätzlich zur Zerkleinerungseinheit einen Rohstoffeinlass, über den das zu zerkleinernde Rohstoffmaterial der Zerkleinerungseinheit zugeführt wird, und einen Produktauslass, über den das zerkleinerte Produkt aus der Zerkleinerungsvorrichtung abgeführt und gegebenenfalls einer weiteren Verarbeitung zugeführt wird.

Erfindungsgemäß ist vorgesehen, dass ein als Kreiskegel ausgebildetes erstes Mahlmittel keine Kegelspitze aufweist, sondern - von oben her gesehen - eine zerklüftete Struktur zeigt, die insbesondere durch die Ausbildung des Förderkanals entsteht. Die zerklüftete Struktur ist derart ausgebildet, dass der zu zerkleinernde Rohstoff, der zuerst im Bereich der nicht vorhandenen Kegelspitze in die Zerkleinerungseinheit übertritt, auf eine glatte Oberfläche in einem Innenbereich des Kreiskegels auftrifft, dort radial beschleunigt wird und den zwischen dem ersten und dem zweiten Mahlmittel ausgebildeten Zerkleinerungsbereichen zugeführt wird.

Die zerklüftete Struktur wird dadurch ausgebildet, dass der Kreiskegel einen ersten Abschnitt aufweist, der sich bereichsweise axial von der Kegelspitze in Richtung der Grundfläche erstreckt. Weiterhin umfasst der Kreiskegel mindestens einen winklig an den ersten Abschnitt anschließenden zweiten Abschnitt, der sich bereichsweise entlang einer Mantellinie des Kreiskegels von der Kegelspitze in Richtung der Grundfläche des Kreiskegels erstreckt.

Der erste und der mindestens eine zweite Abschnitt des Kreiskegels werden insbesondere durch mindestens einen dritten Abschnitt verbunden, der sich radial von dem ersten Abschnitt beziehungsweise von der Kegelachse aus zu dem mindestens einen zweiten Abschnitt beziehungsweise zu der Mantellinie des Kreiskegels hin erstreckt.

Vorzugsweise umfasst der Kreiskegel mindestens zwei zweite Abschnitte, die über zwei dritte Abschnitte jeweils mit dem ersten axialen Abschnitt verbunden sind. Insbesondere sind die mindestens zwei zweiten Abschnitte regelmäßig zur Kegelachse angeordnet, so dass bei Rotation des Kreiskegels um die Kegelachse eine gleichmäßige Bewegung ohne Unwucht ausführbar ist.

Gemäß einer ersten Ausführungsform der Erfindung weist der Kreiskegel zwei zweite Abschnitte auf, die sich entlang einander gegenüberliegenden Mantellinien erstrecken. Die zwei zweiten Abschnitte sind jeweils über zwei dritte Abschnitte mit dem ersten Abschnitt verbunden. Da die beiden zweiten Abschnitte auf der Mantelfläche des Kreiskegels einander gegenüber liegen, sind die zwei dritten Abschnitte in einer Flucht angeordnet. Anders ausgedrückt, in diesem Fall ist ein einziger dritter Abschnitt ausreichend, der sich als Gerade von einem zweiten Abschnitt beziehungsweise einer Mantellinie zur dem anderen zweiten Abschnitt beziehungsweise der gegenüberliegenden Mantellinie erstreckt und wobei der dritte Abschnitt durch die Kegelachse in zwei gleich große Abschnittsbereiche unterteilt wird, die insbesondere als an der Kegelachse gespiegelte Bereiche ausgebildet sind.

Gemäß einer weiteren Ausführungsform der Erfindung weist der Kreiskegel mindestens drei zweite Abschnitte auf, die in einem Winkel von 120 Grad versetzt an der Mantelfläche angeordnet sind. Die drei zweiten Abschnitte sind jeweils durch einen dritte Abschnitt mit dem ersten Abschnitt verbunden, wobei die drei dritten Abschnitte jeweils um 120 Grad versetzt radial von der Kreisachse beziehungsweise vom ersten Abschnitt aus zu dem jeweiligen zweiten Abschnitt hin erstrecken.

Weiterhin wird eine besonders bevorzugte Ausführungsform beschrieben, bei der der Kreiskegel mindestens vier zweite Abschnitte aufweist, die in einem Winkel von 90 Grad versetzt an der Mantelfläche angeordnet sind. Die jeweils einander gegenüberliegenden zweiten Abschnitte sind jeweils durch eine durch die Kegelachse hindurchgehende dritte Abschnitte miteinander und mit dem ersten Abschnitt verbunden, wobei sich der dritte Abschnitt von einem zweiten Abschnitt zu dem gegenüberliegenden zweiten Abschnitt erstreckt und durch die Kegelachse und den ersten Abschnitt hindurch verläuft. Analog zur oben beschriebenen ersten Ausführungsform kann der, die einander gegenüberliegend angeordneten zweiten Abschnitte verbindende dritte Abschnitt, auch als zwei in einer Flucht angeordnete dritte Abschnitte zwischen dem ersten axialen Abschnitt und jeweils einem zweiten Abschnitt angesehen werden.

Vorzugsweise ist vorgesehen, dass durch den ersten, den mindestens einen zweiten und den mindestens einen dritten Abschnitt verhältnismäßig große Bereiche des ersten Mahlmittels, insbesondere des Kreiskegels, fehlen, so dass im Inneren des ersten Mahlmittels beziehungsweise des Kreiskegels, von der Kegelspitze aus gesehen, ein offener Hohlraum ausgebildet ist. Zudem ist die Mantelfläche des ersten Mahlmittels beziehungsweise des Kreiskegels bereichsweise durch den mindestens einen zweiten Abschnitt unterbrochen.

Vorzugsweise stellt der mindestens eine zweite Abschnitt über den mindestens einen dritten Abschnitt eine Verbindung zu einem durch den ersten axialen Abschnitt gebildeten Hohlraum her. Der Hohlraum ist insbesondere von Teilbereichen der Mantelfläche des ersten Mahlmittels beziehungsweise des Kreiskegels umgeben.

Der Rohstoffeinlass ist zumindest teilweise innerhalb des offenen Hohlraums, insbesondere im Bereich des ersten axialen Abschnitts angeordnet. Der Rohstoff beziehungsweise das zugeführte grobkörnige Material wird innerhalb des Hohlraums radial beschleunigt und über die dritten und zweiten Abschnitten direkt den Bereichen zugeleitet, in denen die Zerkleinerung hauptsächlich stattfindet. Beispielsweise wird der Rohstoff somit Bereichen zugeleitet, wobei zwischen dem ersten und dem zweiten Mahlmittel ein Mahlspalt ausgebildet ist. Insbesondere wird das Material in Bereiche des Kreiskegels nahe der Grundfläche geleitet.

Gemäß einer Ausführungsform der Erfindung weist der erste axiale Abschnitt eine Tiefe auf, die zwischen 5% und 95% des Abstandes zwischen einem Schnittpunkt der Grundfläche mit der Kegelachse und der Kegelspitze entspricht. Insbesondere entspricht die Tiefe des ersten Abschnitts zwischen 50% bis 95% des Abstandes zwischen einem Schnittpunkt der Grundfläche mit der Kegelachse und der Kegelspitze. Besonders bevorzugt entspricht die Tiefe des ersten Abschnitts mindestens 80% des Abstandes zwischen einem Schnittpunkt der Grundfläche mit der Kegelachse und der Kegelspitze.

Die Länge der zweiten Abschnitte ist insbesondere analog an die Tiefe des ersten axialen Abschnitts angepasst. Vorzugsweise ist vorgesehen, dass sich der mindestens eine zweite Abschnitt entlang einer Teillänge der Gesamtlänge der Mantellinie von der Kegelspitze in Richtung der Grundfläche erstreckt, die prozentual der Tiefe des ersten Abschnitts in Relation zu dem Abstand zwischen dem Schnittpunkt der Grundfläche mit der Kegelachse und der Kegelspitze entspricht. Das heißt, wenn der erste Abschnitt eine Tiefe aufweist, die 90% der Höhe des Ausgangs-Kreiskegels entspricht, dann entspricht die Teillänge des zweiten Abschnitts entlang der Mantellinie von der Kegelspitze aus gesehen 90% der Gesamtlänge einer Mantellinie zwischen Kegelspitze und Grundfläche des Kreiskegels.

Die Oberfläche des Förderkanals des ersten Mahlmittels ist insbesondere glatt und reibungsarm, so dass das grobkörnige Material nicht anhaftet, sondern durch die Rotation des ersten Mahlmittels entlang des mindestens einen Förderkanals beschleunigt den Zerkleinerungsbereichen zugeführt wird.

Gemäß einer Ausführungsform kann vorgesehen sein, dass der mindestens eine dritte radiale Abschnitt den mindestens einen zweiten Abschnitt mit dem ersten axialen Abschnitt derart verbindet, dass im Inneren des Kreiskegels eine zumindest weitgehend plane, vorzugsweise glatte, reibungsarme Oberfläche in einer Ebene parallel zu der Grundfläche des Kreiskegels ausgebildet ist. Das über den Rohstoffeinlass zugeführte Material trifft somit nicht zuerst auf die mit Zähnen versehene Außenmantelfläche des Kreiskegels. Stattdessen trifft das Material zuerst auf die glatte, reibungsarme Oberfläche im Inneren des durch die Abschnitte gebildeten Hohlraums.

Gemäß einer alternativen Ausführungsform erstreckt sich der mindestens eine zweite Abschnitt entlang einer Teillänge der Gesamtlänge der Mantellinie von der Kegelspitze in Richtung der Grundfläche, die prozentual mindestens ein Prozent größer ist als die Tiefe des ersten Abschnitts in Relation zu dem Abstand zwischen dem Schnittpunkt der Grundfläche mit der Kegelachse und der Kegelspitze. Bei entsprechender Ausbildung des dritten verbindenden Abschnitts wird im Inneren des Kreiskegels eine konvexe Oberfläche ausgebildet. Insbesondere verbindet der mindestens eine dritte radiale Abschnitt den mindestens einen zweiten Abschnitt mit dem ersten axialen Abschnitt derart, dass im Inneren des Kreiskegels eine relativ zu der Grundfläche des Kreiskegels konvexe Oberfläche ausgebildet wird, wobei der größte Abstand vorzugsweise zwischen der konvexen Oberfläche und der Grundfläche im Bereich der Kegelachse ausgebildet ist.

Gemäß einer Ausführungsform der Erfindung kann das zweite Mahlmittel gekühlt werden. Zu diesem Zweck sind dem zweiten Mahlmittel Kühlkammern zugeordnet, die mit einem Kühlmittel befüllt werden können, um einem Erwärmen beziehungsweise Überhitzen des zweiten Mahlmittels und des bearbeiteten Rohstoffs aufgrund der Rotation des ersten Mahlmittels und der dadurch bewirkten Bewegung und Reibung des zugeführten Rohstoffmaterials entgegen zu wirken. Durch die Kühlung können in der Zerkleinerungsvorrichtung auch temperatursensible Rohstoffe verarbeitet werden.

Insbesondere kann das als Brechhohlkegel beziehungsweise Trichter ausgebildete zweite Mahlmittel gekühlt werden. Zu diesem Zweck sind außen an dem Brechhohlkegel beziehungsweise Trichter Kühlkammern angeordnet.

Weiterhin kann vorgesehen sein, dass sowohl das statisch ausgebildete zweite Mahlmittel als auch das rotatorisch ausgebildete erste Mahlmittel jeweils mehrteilig ausgebildet sind. Bei einem Produktwechsel können durch Austausch einzelner Teile des ersten und / oder zweiten Mahlmittels unterschiedliche Feinheitsstufen für das gewünschte Produkt voreingestellt werden. Beispielsweise kann durch Verwendung eines ersten Mahlmittels mit einer anderen Steigung der Abstand zwischen erstem und zweitem Mahlmittel im Bereich der Kegelspitze verändert werden, was sich direkt auf die Bearbeitung des jeweiligen Rohstoff- Materials auswirkt. Auch kann die Verzahnung des ersten und oder zweiten Mahlmittels bereichsweise auf den jeweiligen Rohstoff beziehungsweise die gewünschte Produktfeinheit abgestimmt werden. Weiterhin ist es möglich, durch den Austausch einzelner Bereiche des ersten und / oder zweiten Mahlmittels die Größe des Mahlspaltes zu verändern.

Die den Rohstoff bearbeitenden Bestandteile der Zerkleinerungsvorrichtung, insbesondere die Zerkleinerungseinheit umfassend das erste und das zweite Mahlmittel, bestehen vorzugsweise aus einem verschleißfesten Material wie beispielsweise Keramik, gehärtetem Stahl oder einem anderen geeigneten Material. Insbesondere werden Materialien verwendet, die eine höhere Härte als die zu bearbeitenden Rohstoffe aufweisen, um einen Abrieb und somit eine Verunreinigung des Produktes zu vermeiden.

Mit der erfindungsgemäßen Zerkleinerungsvorrichtung für den Lebensmittelbereich kann bei entsprechender Dimensionierung des ersten und zweiten Mahlmittels zugeführtes Rohstoffmaterial mit einem Durchmesser von bis zu 200 mm bearbeitet werden, wobei eine Feinheit des gemahlenen Produktes in einem Bereich zwischen 30 - 250 µm erzielt werden kann. Mit der erfindungsgemäßen Zerkleinerungsvorrichtung kann somit eine Feinheit erzielt werden, die in etwa einem Tausendstel der Größe des Aufgabegutes entspricht.

Aufgrund der Ausbildung der Zähne auf den Außenmantelflächen des ersten Mahlmittels, insbesondere aufgrund einer großen Anzahl von Zähnen, die eine hohe Zahndichte bewirken, kann mit der erfindungsgemäßen Zerkleinerungsvorrichtung eine sehr hohe Schneidfrequenz erzeugt werden. Beispielsweise kann je nach Maschinengröße und Anzahl und / oder Dichte und / oder Größe der Zähne eine Schnittfrequenz von über 1 Million Schnitte pro Sekunde erzeugt werden.

Die erfindungsgemäße Zerkleinerungsvorrichtung erlaubt zudem eine verbesserte Reinigungsmöglichkeiten im Kreislauf beziehungsweise als CIP Reinigung (clean in place) als vorzugsweise selbstpumpendes System. Dies wird zum einen dadurch bedingt, dass sich innerhalb der Zerkleinerungseinheit gar nicht erst so viel ansetzt und / oder verklebt. Zum anderen wirkt die vorteilhafte Führung über die ersten, zweiten und dritten Abschnitte aufgrund der Zentrifugalkraft auch auf das verwendete Reinigungsfluid.

Weiterhin kann die erfindungsgemäße Zerkleinerungsvorrichtung auch bei gefülltem Rohstoff- beziehungsweise Aufgabeguteinlasstrichter gut arbeiten. Herkömmliche Systeme weisen häufig das Problem auf, dass bei gefülltem Aufgabeguteinlasstrichter oft durch ein Verkleben des Aufgabegutes am Eingang zum Mahlraum der Inhalt des Trichters mit bewegt wird. Da sich beispielsweise die Nüsse oder andere Rohstoffe etcetera am Rohstoffeinlass aufgrund des verklebten Ansatzes ebenfalls mit drehen und so den ganzen Trichterinhalt mit bewegen. Bei dem neuen, erfindungsgemäßem System entsteht keine Verklebung am Rohstoffeinlass beim Übergang in den zwischen dem ersten und dem zweiten Mahlmittel ausgebildeten Mahlraum und somit auch keine ungewünschte Bewegung des Aufgabegutes beziehungsweise Rohstoffes oder Ähnlichem.

Eine erfindungsgemäße Zerkleinerungsvorrichtung benötigt weiterhin für kurze Strecken innerhalb der Zerkleinerungsvorrichtung keine Pumpe. Dies ist insbesondere auf die Pumpwirkung aufgrund der radialen Beschleunigung zurück zu führen.

Die Erfindung betrifft weiterhin ein Verfahren zum Zerkleinern eines grobkörnigen Materials, insbesondere zum Zerkleinern eines grobkörnigen Materials im Nahrungsmittelbereich, in einer Zerkleinerungsvorrichtung umfassend ein erstes axial rotierbares Mahlmittel und wenigstens ein gegenüber dem mindestens einen ersten axial rotierbaren Mahlmittel feststehendes zweites Mahlmittel, welches das mindestens eine erste axial rotierbare Mahlmittel aufnimmt und zur Zerkleinerung des grobkörnigen Materials mit dem mindestens einen ersten axial rotierbaren Mahlmittel in Wirkverbindung steht, wobei das zugeführte Material beim Eintritt in die Zerkleinerungsvorrichtung radial beschleunigt und über wenigstens einen Förderkanal des ersten Mahlmittels der Zerkleinerung zugeführt wird.

Insbesondere ist vorgesehen, dass das zugeführte Material beim Eintritt in die Zerkleinerungsvorrichtung, insbesondere in eine aus erstem und zweitem Mahlmittel bestehende Zerkleinerungseinheit der Zerkleinerungsvorrichtung, auf eine glatte Oberfläche des Förderkanals des ersten Mahlmittels auftrifft, radial beschleunigt wird und somit besonders schnell einem Grobzerkleinerungsbereich zugeführt wird. Diese radiale Beschleunigung ergibt sich daraus, dass das erste Mahlmittel rotatorisch betrieben wird und mindestens eine als Förderkanal ausgebildete weite Durchbrechung aufweist, über die das zugeführte Material an eine Zerkleinerungszone zwischen dem ersten Mahlmittel und dem zweiten Mahlmittel herangeführt wird. Die mindestens eine den Förderkanal bildende Durchbrechung wird insbesondere durch den oben beschriebenen ersten und mindestens einen zweiten und gegebenenfalls mindestens einen dritten Abschnitt des ersten Mahlmittels ausgebildet.

Zur Durchführung des Verfahrens ist insbesondere eine oben beschriebene Zerkleinerungsvorrichtung geeignet.

Aufgrund der radialen Beschleunigung des zugeführten Rohstoff- Materials, die auftritt, noch bevor der eigentlich Zerkleinerungsprozess stattfindet, wird insbesondere verhindert, dass bereits vorzerkleinertes Produkt innerhalb des Bereichs der Materialzuführung verklebt, so dass sich diese zusetzt und gereinigt werden muss. Dies ermöglicht ein kontinuierliches, unterbrechungsfreies Arbeiten der Zerkleinerungsvorrichtung.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A und 1B zeigen jeweils eine schematische Ansicht einer Zerkleinerungseinheit einer Zerkleinerungsvorrichtung.
Figuren 2A bis 2H zeigen unterschiedliche Ansichten eines ersten Mahlmittels.
Figuren 3A bis 3C zeigen unterschiedliche Ansichten einer ersten Ausführungsform eines zweiten Mahlmittels.
Figuren 4A bis 4C zeigen unterschiedliche Ansichten einer zweiten Ausführungsform eines zweiten Mahlmittels.
Figur 5 zeigt eine schematische Ansicht einer Zerkleinerungsvorrichtung.
Figur 6 zeigt eine perspektivische Ansicht einer Zerkleinerungseinheit einer Zerkleinerungsvorrichtung.
Figuren 7A und 7B zeigen die Verwendung einer Zerkleinerungsvorrichtung in einer Anlage zur Herstellung von Schokoladen- und / oder Confectionarymassen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

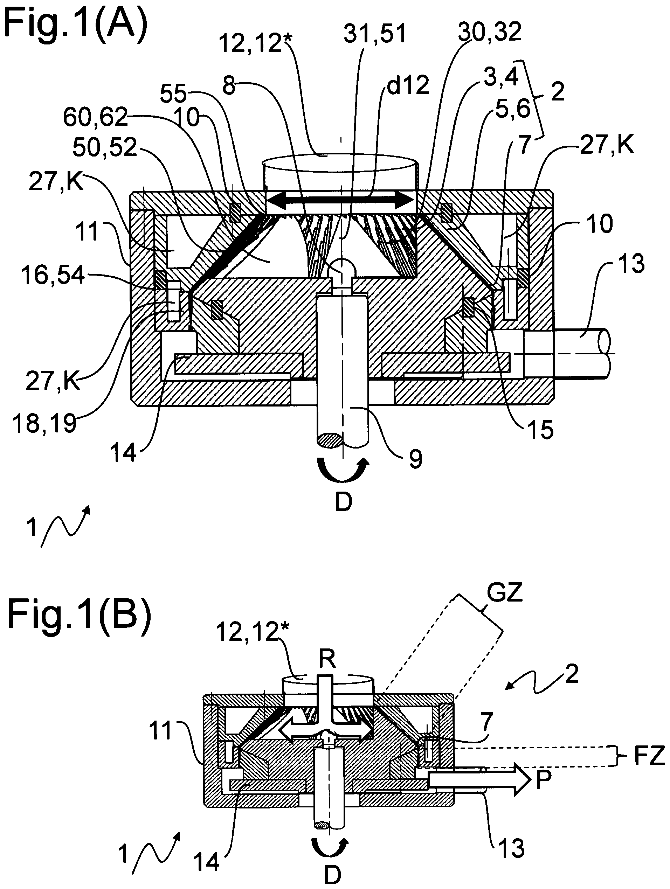

Figuren 1A und 1B zeigen jeweils eine schematische Ansicht einer Zerkleinerungseinheit 2 einer Zerkleinerungsvorrichtung 1. Die Zerkleinerungseinheit 2 umfasst ein erstes axial rotierbares Mahlmittel 3 und ein zweites Mahlmittel 5. Das zweite Mahlmittel 5 ist gegenüber dem ersten axial rotierbaren Mahlmittel feststehend angeordnet und nimmt dieses zumindest teilweise auf. Zur Zerkleinerung eines zugeführten groben Rohstoffs R stehen das erste und das zweite Mahlmittel 3, 5 miteinander in Wirkverbindung.

Das erste und das zweite Mahlmittel 3, 5 sind derart angeordnet, dass zwischen ihnen ein Mahlspalt 7 ausgebildet ist. Im vorliegenden Ausführungsbeispiel ist das erste axial rotierbare Mahlmittel 3 über Befestigungsmittel 8 an einer Antriebswelle 9 angeordnet und wird über die Antriebswelle 9 um eine Drehachse D rotatorisch angetrieben. Das zweite stationäre Mahlmittel 5 ist über Befestigungsmittel 10 an und / oder innerhalb eines die Zerkleinerungseinheit 2 umgebenden Gehäuses 11 ortsfest fixiert.

Gemäß einer alternativen, nicht dargestellten Ausführungsform ist es ebenso möglich, das erste Mahlmittel statisch auszubilden und das zweite Mahlmittel rotatorisch anzuordnen.

Die Zerkleinerungsvorrichtung 1 umfasst weiterhin eine Rohstoffeinlass 12, über den grobe Rohstoffe R, beispielsweise Kakaobohnen, Kaffeebohnen, ganze Nüsse, grob gehackte Nüsse oder Ähnliches in die Zerkleinerungsvorrichtung 1 eingefüllt werden und einen Produktauslass 13, über den zerkleinertes beziehungsweise fein gemahlenes Produkt P abgeführt wird. Der Rohstoffbeziehungsweise Produktfluss innerhalb der Zerkleinerungsvorrichtung ist in Figur 1B durch Pfeile dargestellt. Die Abfuhr des Produktes P wird insbesondere durch einen Austragsrotor 14 unterstützt, der über Befestigungsmittel 15 direkt an dem rotatorisch angetriebenen ersten Mahlmittel 3 befestigt ist und somit gemeinsam mit diesem an der Antriebswelle 9 angeordnet und um die Drehachse D drehbar ist.

Das erste Mahlmittel 3 weist insbesondere die Form eines Kegels oder eines Kegelstumpfes auf, der an seiner Mantelfläche 30 Außenzähne 32 ausgebildet hat. Die Grundform des Kegels ist insbesondere ein gerader Kreiskegel 4 mit einer Kegelachse 31. Die Kegelachse 31 ist vorzugsweise koaxial zur Drehachse D der Antriebswelle 9 ausgerichtet.

Das zweite Mahlmittel 5 weist insbesondere die Forme eines Trichters 6 auf, der vorzugsweise an seiner Innenmantelfläche 50 sogenannte Innenzähne 52 ausgebildet hat. Weiterhin kann vorgesehen sein, dass an dem Trichter 6 im Bereich seines Trichterkopfes 16, d.h. im Bereich einer großen Trichteröffnung 54 ein weiterer Zerkleinerungsring 18 mit Innenzähnen 19 angeordnet ist. Vorzugsweise ist ein Mahlspalt 7 zwischen dem ersten und dem zweiten Mahlmittel 3, 5 im Bereich des Übergangs zwischen Trichter 6 und Zerkleinerungsring 18 ausgebildet.

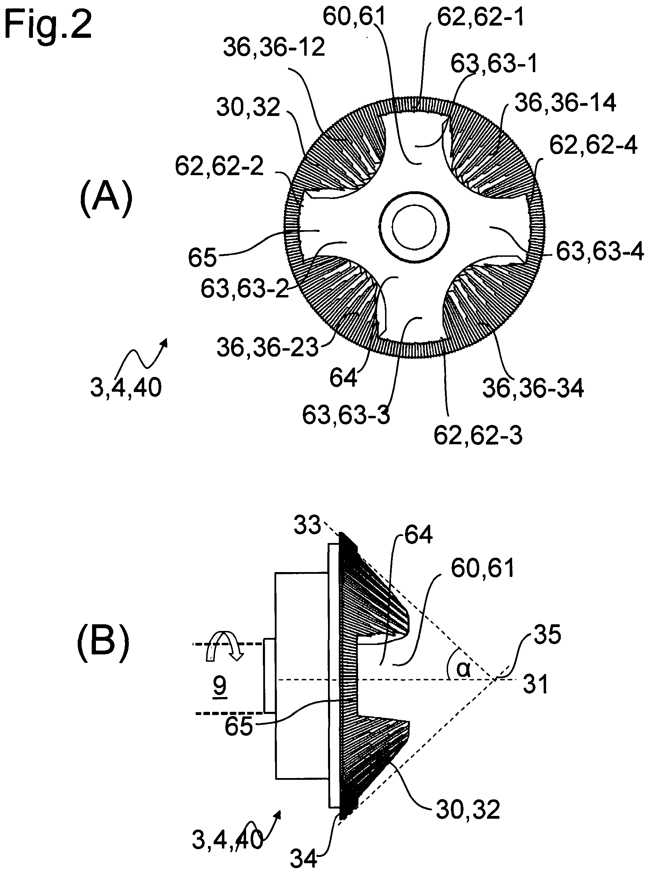

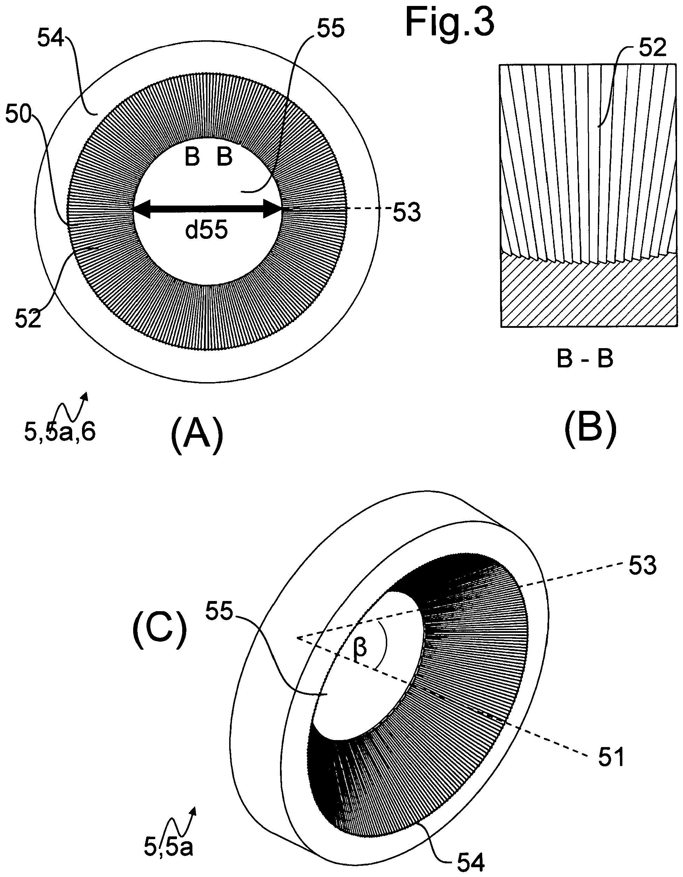

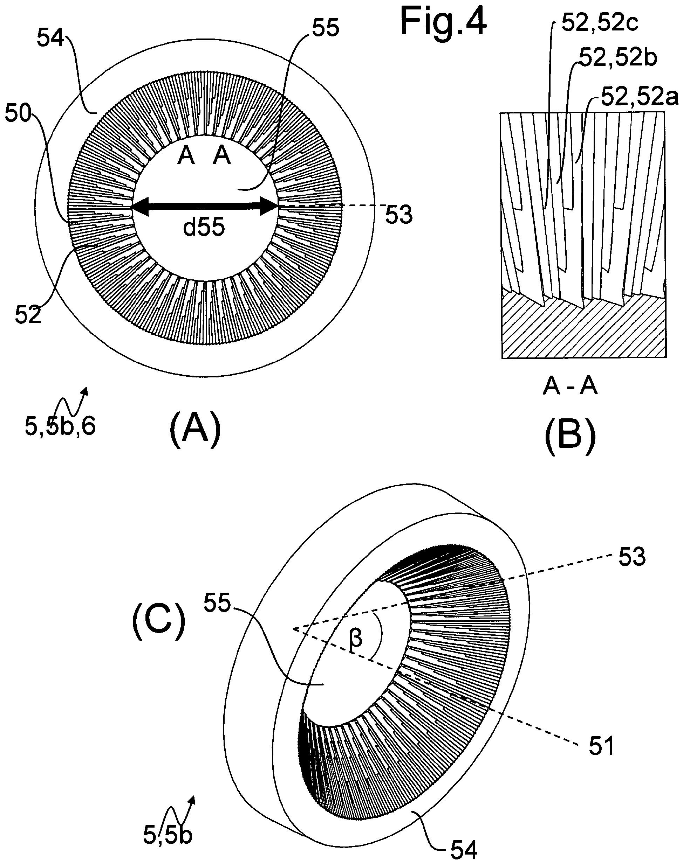

Der zwischen einer Mantellinie 33 des Kreiskegels 4 und der Kegelachse 31 ausgebildete Winkel α (vergleiche Figur 2B) ist vorzugsweise zumindest geringfügig größer als ein zwischen einer Mantellinie 53 des Trichters 6 und einer Trichterachse 51 ausgebildete Winkel β (vergleiche Figuren 3C, 4C).

Das erste Mahlmittel 3 und das zweite Mahlmittel 5 sind derart angeordnet, dass die Kegelachse 31 und die Trichterachse 51 koaxial ausgerichtet sind. Insbesondere ist der Kreiskegel 4 innerhalb des Trichters 6 angeordnet, wobei die Spitze des Kreiskegels 4 in Richtung einer kleinen Trichteröffnung 55 zeigt. Aufgrund der unterschiedlichen Steigungen des Kreiskegels 4 beziehungsweise Trichters 6 ist zwischen der Mantelfläche 30 des Kreiskegels 4 und der Innenmantelfläche 50 des Trichters 6 jeweils ein Abstand ausgebildet, der im Bereich des Mahlspaltes 7 am geringsten ist und in Richtung der Spitze des Kreiskegels 4 beziehungsweise in Richtung der kleinen Trichteröffnung 55 aufgrund der unterschiedlichen Größe der Winkel α und β zunimmt (vergleiche auch Figuren 2B, 3C, 4C).

Die Zerkleinerungseinheit 2 umfassend das erste Mahlmittel 3, das zweite Mahlmittel 5 und gegebenenfalls den Zerkleinerungsring 18 ist derart innerhalb der Zerkleinerungsvorrichtung 1 angeordnet, dass sich die Längsachsen der Mahlmittel 3,5, insbesondere die Kegelachse 31 und die Trichterachse 51 in einer Flucht zum Rohstoffeinlass 12 befinden. Der über den oberen Rohstoffeinlass 12 von oben zugeführte Rohstoff R trifft zuerst auf die kleine Trichteröffnung 55 und den Bereich einer Kegelspitze 35 des Kreiskegels 4. Der Rohstoff wird insbesondere durch die Schwerkraft nach unten in Richtung des Mahlspaltes 7 befördert. Jedoch reicht die Schwerkraft allein häufig nicht aus, um den Rohstoff R beziehungsweise das Aufgabegut in Richtung des Mahlspaltes 7 zu fördern. Der erfindungsgemäß verbesserte Transport des Rohstoffes R zu den Zerkleinerungsbereichen erfolgt deshalb durch einen Förderkanal des ersten Mahlmittels 3, wobei der Transport durch die auf den Rohstoff R beziehungsweise das Aufgabegut wirkende Zentrifugalkraft F zusätzlich unterstützt wird. Der Förderkanal umfasst einen ersten, sich in axialer Richtung erstreckenden Abschnitt 60 und mindestens eine zweiten Abschnitt 62, der sich winklig an den ersten Abschnitt 60 anschließt und eine Außenmantelfläche 30 des ersten axial rotierbaren Mahlmittels 3 durchdringt. Durch die Rotation des ersten Mahlmittels 3 relativ zu dem zweiten Mahlmittel 5 erfolgt eine Zerkleinerung, insbesondere ein Vermahlen, des groben Rohstoffes R. Die Größe des Mahlspaltes 7 gibt insbesondere die Feinheit des vermahlenen Produktes P vor, das anschließend über den Produktauslass 13 abgeführt wird.

Die Rotation des ersten Mahlmittels 3 bewirkt zudem eine radiale Beschleunigung des Rohstoffs R entlang des Förderkanals. Dies führt zu einem gegenüber dem Stand der Technik erhöhten Durchsatz an pro definierter Zeiteinheit zerkleinertem Rohstoff R. Zudem wird eine erhöhte Feinheit an vermahlenem Produkt P erzielt, da die Schnittfrequenz deutlich erhöht ist.

Weiterhin können um das zweite Mahlmittel 5 herum, insbesondere um den Trichter 6 herum, Kühlkammern 27 angeordnet sein. Diese können mittels eines geeigneten Kühlfluides K befüllt werden, so dass eine Temperierung des zweiten Mahlmittel 5 und auch des eingefüllten Rohstoffes R möglich ist. Wird das zweite Mahlmittel 5 gekühlt, so kann das erste Mahlmittel 3 mit einer höheren Drehzahl betrieben werden, ohne den bearbeiteten Rohstoff R zu stark zu erwärmen. Insbesondere ermöglicht die Kühlung, dass auch temperaturempfindliche Materialien schonend durch die Zerkleinerungsvorrichtung 1 vermahlen werden können (vergleiche insbesondere Figur 1A).

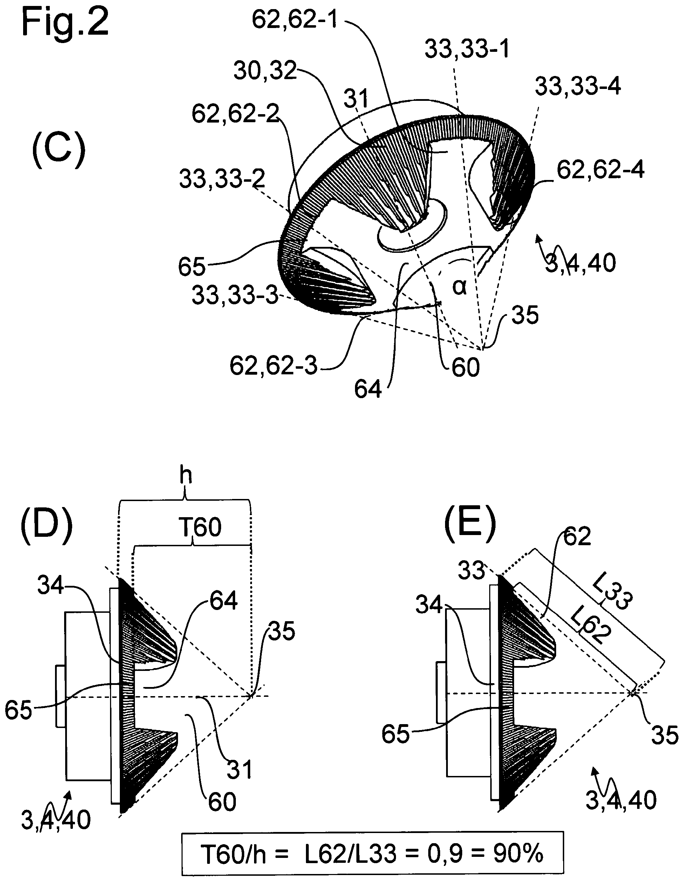

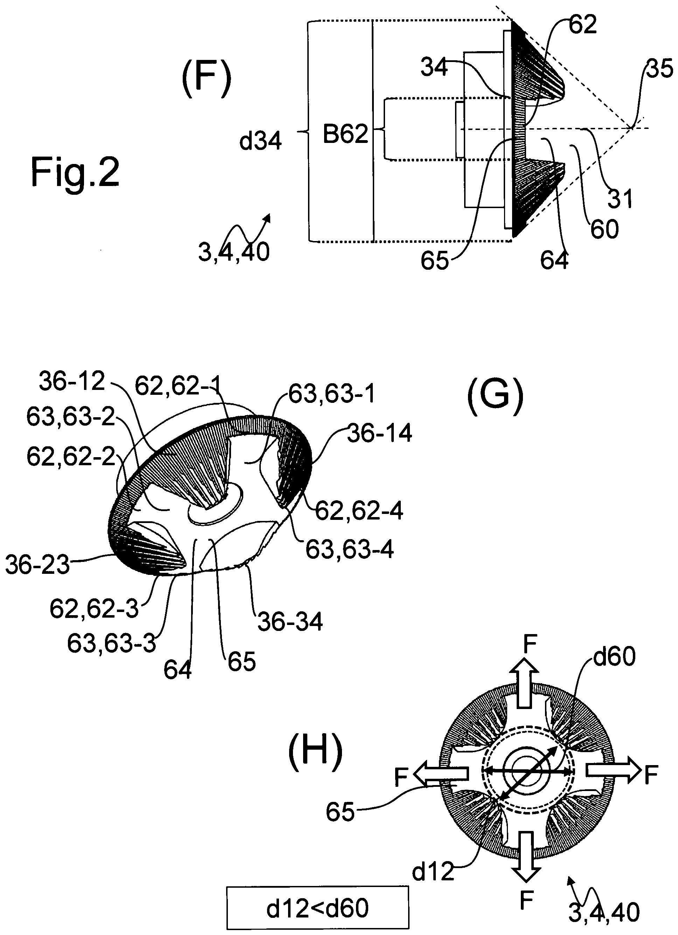

Figuren 2A bis 2H zeigen unterschiedliche Ansichten eines ersten Mahlmittels 3, insbesondere zeigt Figur 2A und 2H eine Draufsicht von der Kegelspitze 35 her, Figuren 2B, 2D bis 2F zeigen jeweils eine seitliche Darstellung und Figuren 2C und 2G zeigen jeweils eine perspektivische Darstellung.

Die Außenzähne 32 auf der Mantelfläche 30 des Mahlmittels 3, insbesondere des Kreiskegels 4 sind bei der dargestellten Ausführungsform insbesondere als progressive Verzahnung ausgebildet. Vorzugsweise nimmt die Zahndichte in Richtung der Kegelspitze 35 ab, das heißt, im Bereich einer Kegelbasis 34 des Kreiskegels 4, wo auch der Mahlspalt 7 zwischen dem ersten und dem zweiten Mahlmittel 3,5 ausgebildet ist (vergleiche Figuren 2A - 2H) ist die Zahndichte am höchsten.

Das Mahlmittel 3 weist im vorliegenden Ausführungsbeispiel die Grundform eines Kreiskegels auf. Zur Ausbildung der Förderkanäle weist das erste Mahlmittel 3 von der Kegelspitze 35 ausgehend einen ersten Abschnitt 60 beziehungsweise eine zentrale Vertiefung 61 auf, der sich zumindest bereichsweise axial entlang der Kegelachse 31 in Richtung der Kegelbasis 34 erstreckt. Weiterhin weist der Kreiskegel 4 mindestens einen zweiten Abschnitt 62 auf, der sich zumindest bereichsweise entlang einer Mantellinie 33 des Kreiskegels 4 von der Kegelspitze 35 in Richtung der Grundfläche beziehungsweise Kegelbasis 34 erstreckt. Im dargestellten Ausführungsbeispiel weist der Kreiskegel 4 vier zweite Abschnitte 62-1 bis 62-4 auf, die sich jeweils entlang einer Mantellinie 33-1 bis 33-4 des Kreiskegels 4 erstrecken. Weiter weist das erste Mahlmittel 3 dritte Abschnitte 63-1 bis 63-4 auf, die sich jeweils radial zwischen dem ersten axialen Abschnitt 60 und den zweiten Abschnitten 62-1 bis 62-4 entlang der Mantellinien 33-1 bis 33-4 erstrecken und den ersten Abschnitt 60 jeweils mit den zweiten Abschnitten 62-1 bis 62-4 verbinden.

Die Gesamtheit der Abschnitte 60, 62, 63 führen zu einem zerklüfteten Aussehen des Kreiskegels 4 von der Kegelspitze 35 aus gesehen. Für den zerklüfteten Kreiskegel wird insbesondere das Bezugszeichen 40 verwendet. Insbesondere ist die Mantelfläche 30 durch die zweiten Abschnitte 62-1 bis 62-4 in mehrere, seitlich voneinander getrennte Teilflächen 36-12, 36-23, 36-34 und 36-14 unterteilt, die einen durch den erste Abschnitt 60 und die dritten Abschnitte 63-1 bis 63-4 gebildeten Hohlraum 64 im Inneren des Kreiskegels 4 umgeben (vergleiche insbesondere Figuren 2A und 2G).

Figuren 2D, 2E und 2F verdeutlichen, dass aufgrund der Abschnitten 60, 62, 63 ein großer Anteil an Material des Kreiskegels 4 fehlt. Der erste, sich axial erstreckende Abschnitt 60 weist gemäß Figur 2D beispielsweise eine Tiefe T60, die im Ausführungsbeispiel in etwa 90% der Höhe h des Kreiskegels 4 entspricht, das heißt, 90% eines Abstandes zwischen der Kegelspitze 35 und eines Schnittpunktes der Kegelachse 31 mit der Kegelbasis 34.

Der zweite Abschnitt 62 erstreckt sich gemäß Figur 2E entlang einer Länge L62 entlang der Mantellinie 33 von der Kegelspitze 35 in Richtung der Grundfläche 34. Die Länge L62 nimmt eine Anteil der Gesamtlänge L33 der Mantellinie 33 ein, der prozentual dem Quotienten aus der Tiefe T60 des ersten Abschnitts 60 und der Höhe h des Kreiskegels 4 entspricht und somit im dargestellten Ausführungsbeispiel ebenfalls in etwa 90% ergibt.

Gemäß Figur 2F ist weiterhin dargestellt, dass die zweiten Abschnitte 62 zudem eine Breite B62 aufweist. Insbesondere erstrecken sich die Abschnitte 62 jeweils über eine konstante Breite B62 parallel zur Mantellinie 33 (vergleiche Figur 2C) ausgehend von der Kegelspitze 35 entlang der in Figur 2E dargestellten Teillänge L62. Im vorliegenden Fall entspricht die Breite B62 eines zweiten Abschnitts 62 in etwa 28% des Durchmessers d34 der Kegelbasis 34.

Die dritten Abschnitte 63 sind entsprechend ausgebildet, so dass die Gesamtheit der Abschnitte 60, 62, 63 im Inneren des Kreiskegels 4 einen Hohlraum 64 mit einer zumindest weitgehend planen Oberfläche 65 in einer Ebene parallel zu der Ebene der Kegelbasis 34 bilden.

Der Hohlraum 64 im Inneren des Kreiskegels 4 wird insbesondere durch die zwischen den zweiten Abschnitten 62-1 bis 62-4 in Figur 2G benannten Teilflächen 36-12, 36-23, 36-34 und 36-14 teilweise umschlossen.

Wie in den Figuren 1 dargestellt, sind das erste und das zweite Mahlmittel 3, 5 derart innerhalb der Zerkleinerungsvorrichtung 1 angeordnet, dass die kleine Trichteröffnung 55 und die durch die Abschnitte 60, 62, 63 zerklüftete Kegelspitze 35 jeweils zum Rohstoffeinlass 12 hinweisen (vergleiche Figuren 1 und 2). Insbesondere ist das erste Mahlmittel 3 derart angeordnet, dass der Rohstoffeinlass 12 durch die kleine Trichteröffnung 55 des zweiten Mahlmittels 5 in den axialen Abschnitt 60 beziehungsweise den Hohlraum 64 des zerklüfteten Kreiskegels 40 hineinragt. Zugeführter Rohstoff R, der bereits ausreichend vorzerkleinert ist und deshalb eine geringere Schwerkraft aufweist, wird über die aufgrund der Drehung des ersten Mahlmittels 3 wirkenden Zentrifugalkräfte F (vergleiche Figur 2H) radial beschleunigt und über die radialen Abschnitte 63 und die Abschnitte 62 vorzugsweise direkt zu der Feinzerkleinerungszone FZ zwischen dem ersten und dem zweiten Mahlmittel 3, 5, insbesondere direkt zu dem Mahlspalt 7, hingeleitet.

Handelt es sich bei dem Rohstoff R beziehungsweise Aufgabegut beispielsweise um Nüsse, so liegt dieser in der Regel derart grob vor, dass immer erst eine Zerkleinerung im Bereich GZ erfolgt, bevor das Mahlgut eine ausreichende Feinheit aufweist, um in dem Bereich FZ feinzermahlen zu werden.

Durch die radialen Abschnitte 63 wird der Beginn der Vermahlung in die Mitte des ersten Mahlmittels 3 verschoben und somit der Bereich vergrößert in dem das Aufgabegut beziehungsweise der zugeführte Rohstoff R zwischen die Mahlmittel 3, 5, gelangt, anstatt wie aus dem Stand der Technik bekannt nur von oben über eine kleinere Kreislinie oder einen Kreisausschnitt an der Spitze des Kegelstumpfes zugeführt zu werden. Der Rohstoffeinlass 12 ist insbesondere als Rohr 12* mit einem kreisrunden Durchmesser ausgebildet (vergleiche Figuren 1). Vorzugsweise ist der Durchmesser d12 des Rohstoffeinlasses 12 geringer als der Innendurchmesser d60 des zerklüfteten Kreiskegels 40 im Bereich des axialen Abschnitts 60 (vergleiche auch Figur 2H). Gemäß einer Ausführungsform ist vorgesehen, dass der Durchmesser d12 des Rohstoffeinlasses 12 zumindest geringfügig geringer ist als der Innendurchmesser d55 des zweiten Mahlmittels 5 (vergleiche auch Figuren 3A und 4A) im Bereich der kleinen Trichteröffnung 55. Insbesondere kann vorgesehen sein, dass das freie Ende des Rohstoffeinlasses 12 beziehungsweise des Rohres 12* durch die kleine Trichteröffnung 55 hindurch in den inneren Hohlraum 64 des zerklüfteten Kreiskegels 40 eintritt.

Wichtig ist insbesondere, dass die Abschnitte 60, 62, 63 eine glatte Oberfläche 65 bilden, auf die der zugeführte Rohstoff R als erstes auftrifft. Da der zugeführte Rohstoff R nicht wie beim Stand der Technik auf die äußere Mantelfläche 30 des ersten Mahlmittels 3 mit den Außenzähnen 32 auftrifft, sondern auf eine glatte Oberfläche 65 im Inneren des Kreiskegels 4 und dort direkt radial beschleunigt wird, kann effektiv verhindert werden, dass sich Rohstoff R im Bereich der Materialzuführung beziehungsweise des Rohstoffeinlasses 12 am ersten Mahlmittel 3 verklebt und / oder den Rohstoffeinlass 12 festsetzt. Insbesondere wird der zugeführte Rohstoff R schneller aus dem Bereich des Materialeintritts abgeführt.

Figuren 3A bis 3C zeigen unterschiedliche Ansichten einer ersten Ausführungsform eines zweiten Mahlmittels 5a. Insbesondere zeigt Figur 3A eine Draufsicht, Figur 3B eine Schnittdarstellung entlang einer Schnittlinie B-B gemäß Figur 3A und Figur 3C eine perspektivische Darstellung.

Das zweite Mahlmittel 5a weist insbesondere die Form eines Trichters 6 auf. Der Trichter 6 umfasst eine große kreisrunde Trichteröffnung 54 und eine kleine kreisrunde Trichteröffnung 55, deren Mittelpunkte jeweils auf einer Trichterachse 51 liegen. Die Innenmantelfläche 50 des Trichters 6 ist als Hohlkonus ausgebildet und ist mit einer Vielzahl von Innenzähnen 52 ausgestattet. Die Ausbildung der Innenzähne 52 ist insbesondere in Figur 3B verdeutlicht. Diese erstrecken sich vorzugsweise jeweils entlang von Mantellinien 53 zwischen der kleinen und der großen Trichteröffnung 55, 54. Insbesondere verjüngen sich die Innenzähne 52 somit in Richtung der kleinen Trichteröffnung 55.

Figuren 4A bis 4C zeigen unterschiedliche Ansichten einer zweiten Ausführungsform eines zweiten Mahlmittels 5b. Insbesondere zeigt Figur 4A eine Draufsicht, Figur 4B eine Schnittdarstellung entlang einer Schnittlinie A-A gemäß Figur 4A und Figur 4C eine perspektivische Darstellung. Für die Beschreibung wird im Wesentlichen auf die Beschreibung zu den Figuren 3 verwiesen.

Analog zu der in den Figuren 2 dargestellten progressiven Verzahnung des ersten Mahlmittels 3 sind die Innenzähne 52 des zweiten Mahlmittels 5b ebenfalls als progressive Verzahnung ausgebildet. Obwohl sich die einzelnen Innenzähne 52 jeweils in Richtung der kleinen Trichteröffnung 55 verjüngen, nimmt die Dichte der Innenzähne 52 aufgrund der progressiven Verzahnung in Richtung der kleinen Trichteröffnung 55 ab. Die progressive Verzahnung wird insbesondere durch eine regelmäßige Anordnung sich in unterschiedlicher Länge in Richtung kleiner Trichteröffnung 55 erstreckender Zähne 52a, 52b und 52c ausgebildet.

Die geringere Zahndichte im Bereich des Rohstoffeinlasses verhindert zusätzlich die Gefahr des Zusetzens und Verklebens der Zähne 52 mit groben Rohstoffbestandteilen und unterstützt eine erste Grobzerkleinerung des Rohstoffs R in einem Bereich GZ (vergleiche auch Figuren 1). Die grobere Verzahnung im Bereich des Rohstoffeinlasses bewirken weniger Widerstand im Zusammenhang mit der Wirkung der Zentrifugalkräfte auf den zugeführten Rohstoff und dem Transport bzw. Ableiten des zugeführten Rohstoffs durch die durch die Abschnitte 60, 62 und 63 gebildeten Führungskanäle in Richtung des Bereichs der Feinzerkleinerung FZ (vergleiche Figur 2).

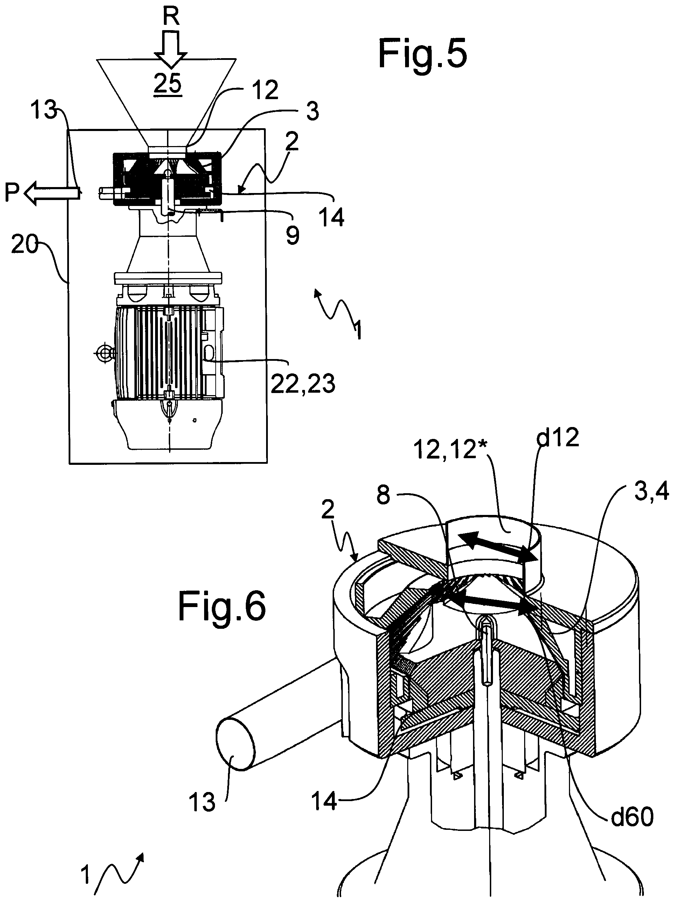

Figur 5 zeigt eine schematische Ansicht einer Zerkleinerungsvorrichtung 1. Figur 6 zeigt eine perspektivische Ansicht einer Zerkleinerungseinheit 2 einer Zerkleinerungsvorrichtung 1 gemäß den Figuren 1 und 5.

Die Zerkleinerungsvorrichtung 1 umfasst eine Zerkleinerungseinheit 2, wie sie insbesondere im Zusammenhang mit den Figuren 1 ausführlich beschrieben worden ist. Die Zerkleinerungsvorrichtung 1 umfasst ein Gehäuse 20, in dem die Zerkleinerungseinheit 2 und ein Antrieb 22 der Zerkleinerungseinheit 2 angeordnet sind. An dem Antrieb 22, beispielsweise einem Elektromotor 23, ist die Antriebswelle 9 angeordnet, an der das erste Mahlmittel 3 befestigt ist, und wird durch den Antrieb 22 rotatorisch bewegt. An dem Rohstoffeinlass 12 ist beispielsweise ein Einfülltrichter 25 angeordnet, in den der Rohstoff R einfach eingefüllt werden kann und über den Rohstoffeinlass 12 der Zerkleinerungseinheit 2 zugeführt wird.

Weiterhin ist zwischen dem Antrieb 22 und der Zerkleinerungseinheit 2 im Bereich des Produktauslass 13 ein Austragsrotor 14 ebenfalls an der Antriebswelle 9 angeordnet, der den Austrag des zerkleinerten Produktes P über den Produktauslass 13 unterstützt.

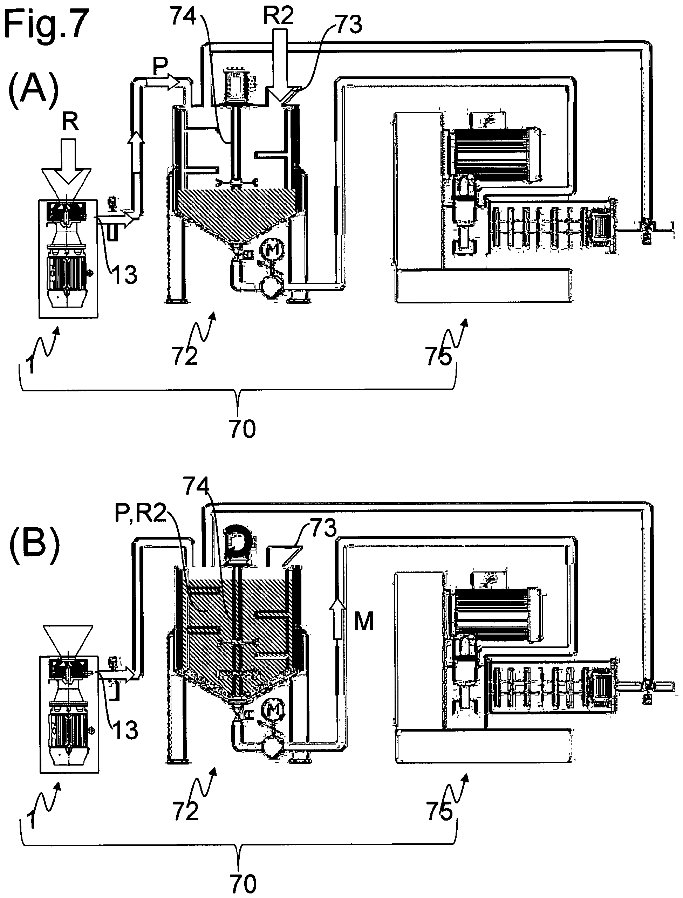

Figuren 7A und 7B zeigen die Verwendung einer Zerkleinerungsvorrichtung 1 in einer Anlage 70 zur Herstellung von Schokoladen- und / oder Confectionarymassen, Süßwarenmassen etcetera. Zuerst werden grobe Rohstoffe R in der Zerkleinerungsvorrichtung 1 feinvermahlen und anschließend wird das feinvermahlene Produkt P über den Produktauslass 13 der Zerkleinerungsvorrichtung 1 abgeführt und in eine Mischvorrichtung 72 überführt. Diese weist einen weiteren Rohstoffeinlass 73 auf, über den weitere Rohstoffe R2, beispielsweise flüssige Rohstoffe wie Fette oder ähnliches, zugeführt werden. Anschließend werden das feinvermahlene Produkt P zusammen mit den weiteren Rohstoffen R2 in der Mischvorrichtung 72 miteinander zu einer zumindest weitgehend homogenen Mischung M vermischt. Hierzu weist die Mischvorrichtung 72 vorzugsweise mindestens ein geeignetes Rührelement 74 auf. Die Mischung M wird anschließend zur weiteren Produktverfeinerung in eine Conchiervorrichtung 75 überführt, durch die die in der Mischung M vorhandene Restfeuchtigkeit schonend entfernt wird.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Zerkleinerungsvorrichtung
- 2: Zerkleinerungseinheit
- 3: erstes Mahlmittel
- 4: Kreiskegel
- 5: zweites Mahlmittel
- 6: Trichter
- 7: Mahlspalt
- 8: Befestigungsmittel
- 9: Antriebswelle
- 10: Befestigungsmittel
- 11: Gehäuse
- 12: Rohstoffeinlass
- 12*: Rohr
- 13: Produktauslass
- 14: Austragsrotor
- 15: Befestigungsmittel
- 16: Trichterkopf
- 18: Zerkleinerungsring
- 19: Innenzähne
- 20: Gehäuse
- 22: Antrieb
- 23: Elektromotor
- 25: Einfülltrichter
- 27: Kühlkammer
- 30: Mantelfläche
- 31: Kegelachse
- 32: Außenzähne
- 33: Mantellinie
- 34: Kegelbasis
- 35: Kegelspitze
- 36: Teilfläche
- 40: zerklüfteter Kreiskegel
- 50: Innenmantelfläche
- 51: Trichterachse
- 52: Innenzähne
- 53: Mantellinie
- 54: große Trichteröffnung
- 55: kleine Trichteröffnung
- 60: erster Abschnitt
- 61: zentrale Vertiefung
- 62: zweiter Abschnitt
- 63: dritter Abschnitt
- 64: Hohlraum
- 65: Oberfläche
- 70: Anlage
- 72: Mischvorrichtung
- 73: Rohstoffeinlass
- 74: Rührelement
- 75: Conchiervorrichtung
- B: Breite
- d: Durchmesser
- D: Drehachse
- F: Zentrifugalkraft
- FZ: Feinzerkleinerung
- GZ: Grobzerkleinerung
- H: Höhe
- K: Kühlfluid
- L: Länge
- M: Mischung
- P: Produkt
- R: Rohstoff
- T: Tiefe

## Patentansprüche

1. Aus wenigstens zwei Teilen bestehende Zerkleinerungsvorrichtung (1) zur Zerkleinerung von grobkörnigem Material (R), insbesondere von grobkörnigen Materialen (R) aus dem Nahrungsmittelbereich, umfassend
- mindestens ein als Kreiskegel ausgebildetes erstes axial rotierbares Mahlmittel (3) mit einer Außenmantelfläche (30);
- wenigstens ein gegenüber dem mindestens einen ersten axial rotierbaren Mahlmittel (3) feststehendes trichterförmiges zweites Mahlmittel (5), welches das mindestens eine erste axial rotierbare Mahlmittel (3) aufnimmt und zur Zerkleinerung des grobkörnigen Materials (R) mit dem mindestens einen ersten axial rotierbaren Mahlmittel (3) in Wirkverbindung steht,
**dadurch gekennzeichnet, dass**
- einander zugewandte Mantelflächen des ersten Mahlmittels (3) und des zweiten Mahlmittels (5) jeweils Zähne aufweisen;-;
- wobei das erste axial rotierbare Mahlmittel (3) wenigstens einen Förderkanal für das jeweilig zu zerkleinernde Material (R) aufweist;
- wobei der wenigstens eine Förderkanal mindestens einen ersten, sich in axialer Richtung erstreckenden Abschnitt (60) und mindestens einen zweiten Abschnitt (62) besitzt, der an den mindestens einen ersten Abschnitt (60) winklig anschließt und die Außenmantelfläche (30) des ersten axial rotierbaren Mahlmittels (3) durchdringt.

2. Zerkleinerungsvorrichtung (1) nach Anspruch 1, wobei das erste axial rotierbare Mahlmittel (3) die Form eines Kreiskegels (4) mit einer Kegelachse (31), einer Mantelfläche (30), einer Kegelspitze (35) und einer Kegelbasis (34) aufweist;
wobei sich der erste Abschnitt (60) bereichsweise axial von der Kegelspitze (35) des Kreiskegels (4) in Richtung der Grundfläche (34) des Kreiskegels (4) erstreckt.

3. Zerkleinerungsvorrichtung (1) nach Anspruch 2, wobei der Förderkanal mindestens einen dritten Abschnitt (63) aufweist, der sich radial von dem ersten Abschnitt (60) aus zu dem mindestens einen zweiten Abschnitt (62) erstreckt.

4. Zerkleinerungsvorrichtung (1) nach Anspruch 3, wobei sich mindestens zwei zweite Abschnitte (62) entlang einander gegenüberliegender Mantellinien (33) des Kreiskegels (4) erstrecken und wobei die zwei zweiten Abschnitte (62) durch mindestens einen dritten Abschnitt (63) miteinander und mit dem ersten axialen Abschnitt (60) verbunden sind, wobei sich der dritte Abschnitt (63) von der einen Mantellinie (33) zu der anderen Mantellinie (33) des Kreiskegels (4) erstreckt und durch die Kegelachse (31) des Kreiskegels (4) hindurch verläuft.

5. Zerkleinerungsvorrichtung (1) nach Anspruch 3, wobei mindestens drei zweite Abschnitte (62) in einem Winkel von 120 Grad versetzt an der Mantelfläche (30) des Kreiskegels (4) angeordnet sind und wobei die drei zweiten Abschnitte (62) jeweils durch einen dritten Abschnitt (63) mit dem ersten Abschnitt (60) verbunden sind, wobei sich die drei dritten Abschnitte (63) jeweils um 120 Grad versetzt radial von der Kegelachse (31) ausgehend beziehungsweise radial von den ersten Abschnitt (60) ausgehend zum jeweiligen zweiten Abschnitt (62) hin erstrecken.

6. Zerkleinerungsvorrichtung (1) nach Anspruch 3, wobei mindestens vier zweite Abschnitte (62) in einem Winkel von 90 Grad versetzt an der Mantelfläche (30) des Kreiskegels (4) angeordnet sind und wobei die jeweils einander gegenüberliegenden zweiten Abschnitte (62) durch jeweils einen dritten Abschnitt (63) miteinander und mit dem ersten Abschnitt (60) verbunden sind, wobei sich der jeweilige dritte Abschnitt (63) von einem zweiten Abschnitt (62) zu dem gegenüberliegenden zweiten Abschnitt (62) erstreckt und durch die Kegelachse (31) hindurch verläuft.

7. Zerkleinerungsvorrichtung (1) nach einem der Ansprüche 2 bis 6, wobei der erste Abschnitt (60) eine Tiefe (T60) aufweist, die zwischen 5% und 95% eines Abstandes (h) zwischen einem Schnittpunkt der Grundfläche (34) mit der Kegelachse (31) und der Kegelspitze (35) entspricht, vorzugsweise entspricht die Tiefe (T60) des ersten Abschnittes (60) zwischen 50% bis 95% des Abstandes (h) zwischen einem Schnittpunkt der Grundfläche (34) mit der Kegelachse (31) und der Kegelspitze (35), besonders bevorzugt entspricht die Tiefe (T60) des ersten Abschnittes (60) mindestens 80% des Abstandes (h) zwischen einem Schnittpunkt der Grundfläche (34) mit der Kegelachse (31) und der Kegelspitze (35).

8. Zerkleinerungsvorrichtung (1) nach Anspruch 6, wobei sich die zweiten Abschnitte (62) jeweils entlang einer Teillänge (L62) einer Gesamtlänge (L33) der Mantellinie (33) von der Kegelspitze (35) in Richtung der Grundfläche (34) erstrecken, die prozentual der Tiefe (T60) des ersten Abschnittes (60) in Relation zu dem Abstand (h) zwischen dem Schnittpunkt der Grundfläche (34) mit der Kegelachse (31) und der Kegelspitze (35) entsprechen.

9. Zerkleinerungsvorrichtung (1) nach Anspruch 7, wobei der mindestens eine dritte Abschnitt (63) den mindestens einen zweiten Abschnitt (62) mit dem ersten Abschnitt (60) derart verbindet, dass im Inneren des Kreiskegels (4) eine zumindest weitgehend plane Oberfläche (65) in einer Ebene parallel zu der Grundfläche (34) des Kreiskegels (4) ausgebildet ist.

10. Zerkleinerungsvorrichtung (1) nach Anspruch 6, wobei sich die zweiten Abschnitte (62) jeweils entlang einer Teillänge (L62) der Gesamtlänge (L33) der Mantellinie (33) von der Kegelspitze (35) in Richtung der Grundfläche (34) erstrecken, die prozentual mindestens ein Prozent größer ist als die Tiefe des ersten Abschnitts (60) in Relation zu dem Abstand zwischen dem Schnittpunkt der Grundfläche (34) mit der Kegelachse (31) und der Kegelspitze (35).

11. Zerkleinerungsvorrichtung (1) nach Anspruch 7, wobei der mindestens eine dritte radiale Abschnitt (63) den mindestens einem zweitem Abschnitt (62) mit dem ersten axialen Abschnitt (60) derart verbindet, dass im Inneren des Kreiskegels (4) eine zu der Grundfläche (34) des Kreiskegels (4) konvexe Oberfläche ausgebildet ist, wobei ein größter Abstand zwischen der konvexen Oberfläche und der Grundfläche (34) des Kreiskegels (4) auf der Kegelachse (31) ausgebildet ist.

12. Verfahren zum Zerkleinern eines grobkörnigen Materials (R), insbesondere zum Zerkleinern eines grobkörnigen Materials (R) im Nahrungsmittelbereich, in einer Zerkleinerungsvorrichtung (1) gemäß einem der Ansprüche 1 bis 11 umfassend ein erstes axial rotierbares Mahlmittel (3) und wenigstens ein gegenüber dem mindestens einen ersten axial rotierbaren Mahlmittel (3) feststehendes zweites Mahlmittel (5), welches das mindestens eine erste axial rotierbare Mahlmittel (3) aufnimmt und zur Zerkleinerung des grobkörnigen Materials (R) mit dem mindestens einen ersten axial rotierbaren Mahlmittel (3) in Wirkverbindung steht (5), **dadurch gekennzeichnet, dass** das Material (R) beim Eintritt in die Zerkleinerungsvorrichtung (1) radial beschleunigt und über wenigstens einen Förderkanal des ersten Mahlmittels (3) der Zerkleinerung zugeführt wird.

13. Verfahren nach Anspruch 12, wobei das Material (R) beim Eintritt in die Zerkleinerungsvorrichtung (1) auf eine glatte Oberfläche des ersten Mahlmittels (3) auftrifft, radial beschleunigt wird und einem Grobzerkleinerungsbereich (GZ) zugeführt wird.

14. Verfahren nach Anspruch 12 oder 13, wobei das erste Mahlmittel (3) weite Durchbrechungen aufweist, die den mindestens einen Förderkanal bilden, über die das Material (R) an eine Zerkleinerungszone zwischen dem ersten Mahlmittel (3) und dem zweiten Mahlmittel (5) herangeführt wird.

15. Verfahren nach einem der Anspruch 12 bis 14, wobei eine Zerkleinerungsvorrichtung (1) gemäß einem der Ansprüche 1 bis 11 verwendet wird.

## Claims

1. A size-reduction device (1) comprising at least two parts for the size-reduction of coarse-grained material (R), in particular of coarse-grained materials (R) from the foodstuffs sector, comprising
- at least one first axially rotatable grinding means (3) constituted as a circular cone with an outer lateral surface (30);
- at least one funnel-shaped second grinding means (5), which is fixed with respect to the at least one first axially rotatable grinding means (3) and which accommodates the at least one first axially rotatable grinding means (3) and is operatively connected to the at least one first axially rotatable grinding means (3) for the size-reduction of coarse-grained material (R),
**characterised in that**
- mutually facing lateral surfaces of the first grinding means (3) and of the second grinding means (5) each comprise teeth;
- wherein the first axially rotatable grinding means (3) comprises at least one delivery channel for the material (R) to be sized-reduced in each case;
- wherein the at least one delivery channel has at least one first portion (60) extending in the axial direction and at least one second portion (62), which adjoins the at least one first portion (60) at an angle and penetrates the outer lateral surface (30) of the first axially rotatable grinding means (3).

2. The size-reduction device (1) according to claim 1, wherein the first axially rotatable grinding means (3) has the shape of a circular cone (4) with a cone axis (31), a lateral surface (30), a cone tip (35) and a cone base (34);
wherein a first portion (60) extends in sections axially from the cone tip (35) of the circular cone (4) in the direction of the base surface (34) of the circular cone (4).

3. The size-reduction device (1) according to claim 2, wherein the delivery channel comprises at least one third portion (63) which extends radially out of the first portion (60) to the at least one second portion (62) .

4. The size-reduction device (1) according to claim 3, wherein at least two second portions (62) extend along mutually opposite surface lines (33) of the circular cone (4) and wherein the two second portions (62) are connected by at least one third portion (63) to one another and to the first axial portion (60), wherein the third portion (63) extends from the one surface line (33) to the other surface line (33) of the circular cone (4) and runs through the cone axis (31) of the circular cone (4).

5. The size-reduction device (1) according to claim 3, wherein at least three second portions (62) are arranged offset at an angle of 120 degrees on the lateral surface (30) of the circular cone (4), and wherein the three second portions (62) are each connected by a third portion (63) to the first portion (60), wherein the three third portions (63) each extend offset by 120 degrees proceeding radially from the cone axis (31) or proceeding radially from the first portion (60) to the respective second portion (62) .

6. The size-reduction device (1) according to claim 3, wherein at least four second portions (62) are arranged offset at an angle of 90 degrees on the lateral surface (30) of the circular cone (4), and wherein the in each case mutually opposite second portions (62) are connected in each case by a third portion (63) to one another and to the first portion (60), wherein the respective third portion (63) extends from a second portion (62) to the opposite second portion (62) and runs through the cone axis (31) .

7. The size-reduction device (1) according to any one of claims 2 to 6, wherein the first portion (60) has a depth (T60), which corresponds to between 5 % and 95 % of a distance (h) between a point of intersection of the base surface (34) with the cone axis (31) and the cone tip (35), the depth (T60) of the first portion (60) preferably corresponding to between 50 % to 95 % of the distance (h) between a point of intersection of the base surface (34) with the cone axis (31) and the cone tip (35), the depth (T60) of the first portion (60) particularly preferably corresponding to at least 80 % of the distance (h) between a point of intersection of the base surface (34) with the cone axis (31) and the cone tip (35).

8. The size-reduction device (1) according to claim 6, wherein the second portions (62) each extend along a partial length (L62) of a total length (L33) of the surface line (33) from the cone tip (35) in the direction of the base surface (34), which corresponds on a percentage basis to the depth (T60) of the first portion (60) in relation to the distance (h) between the point of intersection of the base surface (34) with the cone axis (31) and the cone tip (35).

9. The size-reduction device (1) according to claim 7, wherein the at least one third portion (63) connects the at least one second portion (62) to the first portion (60) in such a way that, in the interior of the circular cone (4), an at least largely plane surface (65) is formed in a plane parallel to the base surface (34) of the circular cone (4).

10. The size-reduction device (1) according to claim 6, wherein the second portions (62) each extend along a partial length (L62) of the total length (L33) of the surface line (33) from the cone tip (35) in the direction of the base surface (34), which on a percentage basis is at least one percent greater than the depth of the first portion (60) in relation to the distance between the point of intersection of the base surface (34) with the cone axis (31) and the cone tip (35) .

11. The size-reduction device (1) according to claim 7, wherein the at least one third portion (63) connects the at least one second portion (62) to the first axial portion (60) in such a way that a surface convex with respect to the base surface (34) of the circular cone (4) is formed in the interior of the circular cone (4), wherein a greatest distance between the convex surface and the base surface (34) of the circular cone (4) is constituted on the cone axis (31) .

12. A method for the size-reduction of a coarse-grained material (R), in particular for the size-reduction of coarse-grained material (R) from the foodstuffs sector, in a size-reduction device (1) according to any one of claims 1 to 11, comprising a first axially rotatable grinding means (3) and at least one second grinding means (5), which is fixed with respect to the at least one first axially rotatable grinding means (3) and which accommodates the at least one first axially rotatable grinding means (3) and is operatively connected (5) to the at least one first axially rotatable grinding means (3) for the size-reduction of coarse-grained material (R), **characterised in that** the material (R) is radially accelerated upon entering into the size-reduction device (1) and fed for size reduction via at least one delivery channel of the first grinding means (3).

13. The method according to claim 12, wherein the material (R), upon entering into the size-reduction device (1), strikes a smooth surface of the first grinding means (3), is radially accelerated and fed to a coarse size-reduction region (GZ).

14. The method according to claim 12 or 13, wherein the first grinding means (3) comprises wide perforations which form the at least one delivery channel, via which the material (R) is conveyed to a size-reduction zone between the first grinding means (3) and the second grinding means (5).

15. The method according to any one of claims 12 to 14, wherein a size-reduction device (1) according to any one of claims 1 to 11 is used.

## Revendications

1. Dispositif de concassage (1), composé d'au moins deux parties, destiné à concasser une matière (R) d'une granulométrie grossière, notamment des matières (R) d'une granulométrie grossière dans le secteur agro-alimentaire, comprenant :
- au moins un premier moyen de broyage (3) rotatif en direction axiale, conçu sous la forme d'un cône circulaire, pourvu d'une surface d'enveloppe extérieure (30) ;
- au moins un deuxième moyen de broyage (5) en forme de trémie, stationnaire par rapport à l'au moins un premier moyen de broyage (3) rotatif en direction axiale, lequel réceptionne l'au moins un premier moyen de broyage (3) rotatif en direction axiale et qui pour le concassage de la matière (R) d'une granulométrie grossière est en liaison active avec l'au moins un moyen de broyage (3) rotatif en direction axiale,
**caractérisé en ce que**
- des surfaces d'enveloppe qui se font mutuellement face du premier moyen de broyage (3) et du deuxième moyen de broyage (5) comportent respectivement des dents ;
- le premier moyen de broyage (3) rotatif en direction axiale comportant au moins un canal de convoyage pour la matière (R) qui doit être respectivement concassée ;
- l'au moins un canal de convoyage disposant d'au moins un premier tronçon (60), s'étendant dans la direction axiale et d'au moins un deuxième tronçon (62), qui se raccorde sous forme angulaire sur l'au moins un premier tronçon (60) et qui pénètre dans la surface d'enveloppe extérieure (30) du premier moyen de broyage (3) rotatif en direction axiale.

2. Dispositif de concassage (1) selon la revendication 1, le premier moyen de broyage (3) rotatif en direction axiale présentant la forme d'un cône circulaire (4) pourvu d'un axe de cône (31), d'une surface d'enveloppe (30), d'un sommet de cône (35) et d'une base de cône (34) ;
le premier tronçon (60) s'étendant par endroits en direction axiale du sommet de cône (35) du cône circulaire (4) en direction de la superficie de base (34) du cône circulaire (4).

3. Dispositif de concassage (1) selon la revendication 2, le canal de convoyage comportant au moins un troisième tronçon (63), lequel s'étend en direction radiale à partir du premier tronçon (60) vers l'au moins un deuxième tronçon (62).

4. Dispositif de concassage (1) selon la revendication 3, au moins deux deuxièmes tronçons (62) s'étendant le long de lignes d'enveloppe (33) mutuellement en vis-à-vis du cône circulaire (4) et les deux deuxièmes tronçons (62) étant reliés l'un à l'autre et avec le premier tronçon (60) axial par un troisième tronçon (63), le troisième tronçon s'étendant de l'une (33) des lignes d'enveloppe vers l'autre ligne d'enveloppe (33) du cône circulaire (4) et s'écoulant à travers l'axe de cône (31) du cône circulaire (4).

5. Dispositif de concassage (1) selon la revendication 3, au moins trois deuxièmes tronçons (62) étant placés avec un décalage de 120 degrés sur la surface d'enveloppe (30) du cône circulaire (4) et les trois deuxièmes tronçons (62) étant reliés par respectivement un troisième tronçon (63) avec le premier tronçon (60), les trois troisièmes tronçons (63) s'étendant avec respectivement un décalage de 120 degrés en partant en direction radiale de l'axe de cône (31), respectivement en partant en direction radiale du premier tronçon (60) vers le deuxième tronçon (62) respectif.

6. Dispositif de concassage (1) selon la revendication 3, au moins quatre deuxièmes tronçons (62) étant placés avec un décalage de 90 degrés sur la surface d'enveloppe (30) du cône circulaire (4) et au moins les deuxièmes tronçons (62) placés respectivement en vis-à-vis étant reliés l'un à l'autre et avec le premier tronçon (60) par respectivement un troisième tronçon (63), le troisième tronçon (63) respectif s'écoulant d'un deuxième tronçon (62) vers le deuxième tronçon (62) placé en vis-à-vis et à travers l'axe de cône (31).

7. Dispositif de concassage (1) selon l'une quelconque des revendications 2 à 6, le premier tronçon (60) présentant une profondeur (T60) qui correspond à de 5 % à 95 % d'un écart (h) entre un point d'intersection de la superficie de base (34) avec l'axe de cône (31) et le sommet de cône (35), de préférence, la profondeur (T60) du premier tronçon (60) correspond à de 50 % à 95 % de l'écart (h) entre un point d'intersection de la superficie de base (34) avec l'axe de cône (31) et le sommet de cône (35), de manière particulièrement préférentielle, la profondeur (T60) du premier tronçon (60) correspond à au moins 80 % de l'écart (h) entre le point d'intersection de la superficie de base (34) avec l'axe de cône (31) et le sommet de cône (35).

8. Dispositif de concassage (1) selon la revendication 6, les deuxièmes tronçons (62) s'étendant respectivement le long d'une longueur partielle (L62) d'une longueur totale (L33) de la ligne d'enveloppe (33) du sommet de cône (35) dans la direction de la superficie de base (34) qui correspond en pourcentage à la profondeur (T60) du premier tronçon (60) en relation à l'écart (h) entre le point d'intersection de la superficie de base (34) avec l'axe de cône (31) et le sommet de cône (35).

9. Dispositif de concassage (1) selon la revendication 7, l'au moins un troisième tronçon (63) reliant l'au moins un deuxième tronçon (62) avec le premier tronçon (60), de telle sorte qu'à l'intérieur du cône circulaire (4) soit créée une surface (65) au moins largement plane, dans un plan à la parallèle de la superficie de base (34) du cône circulaire (4).

10. Dispositif de concassage (1) selon la revendication 6, les deuxièmes tronçons (62) s'étendant respectivement le long d'une longueur partielle (L62) de la longueur totale (L33) de la ligne d'enveloppe (33), du sommet de cône (35) en direction de la superficie de base (34), qui en pourcentage est supérieure d'au moins un pour cent à la profondeur du premier tronçon (60) en relation à l'écart entre le point d'intersection de la superficie de base (34) avec l'axe de cône (31) et le sommet de cône (35).

11. Dispositif de concassage (1) selon la revendication 7, l'au moins un troisième tronçon (63) radial reliant l'au moins un deuxième tronçon (62) avec le premier tronçon (60) axial, de telle sorte qu'à l'intérieur du cône circulaire (4) soit créée une surface convexe par rapport à la superficie de base (34) du cône circulaire (4), un écart le plus grande entre la surface convexe et la superficie de base (34) du cône circulaire (4) étant créé sur l'axe de cône (31).

12. Procédé, destiné à concasser une matière (R) d'une granulométrie grossière, destiné notamment à concasser une matière (R) d'une granulométrie grossière dans le secteur agro-alimentaire, dans un dispositif de concassage (1) selon l'une quelconque des revendications 1 à 11, comprenant un premier moyen de broyage (3) rotatif en direction axiale, et au moins un deuxième moyen de broyage (5) stationnaire par rapport à l'au moins un premier moyen de broyage (3) rotatif en direction axiale, lequel réceptionne l'au moins un premier moyen de broyage (3) rotatif en direction axiale et qui pour le concassage de la matière (R) d'une granulométrie grossière est en liaison active (5) avec l'au moins un moyen de broyage (3) rotatif en direction axiale, **caractérisé en ce qu'**à l'entrée dans le dispositif de concassage (1), la matière (R) est accélérée en direction radiale et par l'intermédiaire d'au moins un canal de convoyage du premier moyen de broyage (3) est alimentée vers le concassage.

13. Procédé selon la revendication 12, à l'entrée dans le dispositif de concassage (1), la matière (R) étant incidente sur une surface lisse du premier moyen de broyage (3), étant accélérée en direction radiale et étant alimentée dans une région de concassage grossier (GZ) .

14. Procédé selon la revendication 12 ou 13, le moyen de broyage (3) comportant de larges ajours, qui forment l'au moins un canal de convoyage, par l'intermédiaire desquels la matière (R) est amenée vers une zone de concassage entre le premier moyen de broyage (3) et le deuxième moyen de broyage (5).

15. Procédé selon l'une quelconque des revendications 12 à 14, un dispositif de concassage (1) selon l'une quelconque des revendications 1 à 11 étant utilisé.
